# EUROPEAN PATENT APPLICATION

(11) **EP 4 358 568 A1**
(43) Date of publication of application: **24.04.2024**
(21) Application number: 22201916.8
(22) Date of filing: 17.10.2022
(51) Int. Cl.: H04W 24/02, H04L 41/147, H04W 16/20, G06N 20/00

(54) **ENVIRONMENTALLY CONTROLLING AN INDUSTRIAL ENVIRONMENT FOR OPTIMIZING WIRELESS NETWORK PERFORMANCE**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The disclosed embodiments relate to a computer-implemented method for environmentally controlling an industrial wireless network operated in an industrial environment including processing facilities and processing materials. Continuous optimization of the radio characteristics ensures seamless operations in changing of dynamic environments wherein relocating materials and/or mobile production equipment have a dynamic impact on the radio characteristics.

The disclosed embodiments suggest changing the environmental conditions within the industrial environment, or, in other words, environmentally controlling the industrial environment itself rather than exclusively adjusting radio characteristics of the industrial wireless network. Changing the environmental conditions may particularly relocating processing facilities and/or processing materials in order to enhance the capabilities of the wireless network.

## Description

### TECHNICAL FIELD

The disclosed embodiments generally relate to the field of environmentally controlling an industrial environment. Specifically, the disclosed embodiments relate to a method of identifying relocations to be made to at least one processing facility and/or at least one processing material of the industrial environment in order to optimize an operation of a wireless network being maintained within the industrial environment.

### BACKGROUND

Industrial communication is increasingly operated over wireless networks. At the same time, industrial processes and equipment commissioned for industrial processes are increasingly being connected wirelessly. Increased flexibility in industrial processes promotes emerging types of industrial concepts including fully automated warehouses or flexible production areas where production facilities may be frequently rearranged.

One commonality of these industrial concepts is that the industrial environment may significantly change over time, depending on the incoming and outgoing material, as well as the process state. Due to this continuously modified environment configuration, physical conditions of the industrial environment are accordingly subject to change. These changes affect the industrial wireless network including radio characteristics of wireless communication equipment involved in the formation of one or more segments of a local campus networks or the industrial wireless network in general.

Industrial operation of a wireless network system further involves a particular requirement in that wireless communication equipment needs to be changed frequently and exchanges need to be done rapidly. Rapid exchange operations usually require data driven network planning methods and preemptive data driven measures for reconfiguration of the wireless communication equipment during operations. Ideally, such equipment reconfiguration would be performed in a manner preventing the industrial wireless network from performance degradation or even failure or breakdown. At present, however, continuous planning and optimization schemes in industrial wireless network are still in their infancy.

Currently applied planning methods, however, are rather discontinuous. The current planning is based on a set of different radio network maps as a result of a multiplicity of radio signal strength measurements for a set of different situations. Ad-hoc measurements for such radio network maps are taken at discrete times or snapshots. Accordingly, it is currently not possible to capture or assess a dynamic behavior of a wireless network operated in an industrial environment at runtime.

Still further, network management systems currently in use systems cannot be linked to industrial process equipment for supplying or evaluating process data, so that an alignment of the network configuration to expectable changes caused, e.g., by a changing production process, is currently not possible and has not even been considered to date.

Accordingly, there is a need in the art for a continuous optimization of an industrial wireless network in order to ensure seamless operations of industrial wireless networks in changing or dynamic environments using in-line measurement data of present and future radio access protocols such as 5G or 6G campus networks.

### SUMMARY AND DESCRIPTION

The present invention relates to a computer-implemented method for environmentally controlling an industrial environment including processing facilities and processing materials, wherein a wireless network being maintained within the industrial environment including equipment for operating the wireless network and/or for being connected to the wireless network, the method comprising the steps of:
- retrieving a set of location data including at least one current location of at least one of said processing facilities and/or at least one current location of at least one of said processing materials;
- determining a performance basis indicator by assessing a first spatial model of radio characteristics of the wireless network using at least partially said set of location data;
- assuming a set of relocation data including at least one relocation of at least one of said processing facilities and/or at least one relocation of at least one of said processing materials;
- determining a performance destination indicator by assessing a second spatial model of radio characteristics of the wireless network, the second spatial model being created by at least partially modifying said first spatial model using at least partially said set of relocation data;
- identifying a deviation between said performance basis indicator represented by said first spatial model and said performance destination indicator represented by said second spatial model;
- on an occurrence of said deviation, determining action data using the first and the second spatial model of radio characteristics of the wireless network, said action data identifying one or more relocations to be made to at least one of said processing facilities and/or at least one of said processing materials of the industrial environment in order to reduce said deviation; and;
- outputting said action data to an environmental control system.

According to the invention, a set of location data is retrieved or determined. The set of location data includes a current location of at least one processing facility or equipment - or, more generally, network entity - and/or processing material.

A performance basis indicator is determined expressing radio characteristics of the »basis«, i.e. the wireless network wherein one or more items are located in an initial location. The basis for deriving the performance basis indicator is a first spatial model of radio characteristics which is generated using said set of location data. A spatial model of radio characteristics is established by assigning measured values of radio characteristics of the wireless network - e.g., a signal quality, a latency, a bit error rate, a network status, a frame error rate and/or a wireless network channel - to spatial (two-dimensional or three-dimensional) coordinates in order to assign one or more parameter radio characteristics to a spatial coordinate within the industrial environment.

Further on a set of relocation data is assumed, e.g. virtually determined for simulation purposes or factually determined due to a predicted movement. Thereby one or more virtual displacements or movements of processing facilities and/or processing materials is assumed, which is reflected in correspondingly changed relocation data. A set of relocation data includes at least one change of spatial coordinates due to a relocation or movement of said items.

A performance destination indicator is determined to express radio characteristics of the »destination«, i.e. the wireless network wherein one or more items are virtually or factually relocated to consecutive locations. The basis for deriving the performance destination indicator is a second spatial model of radio characteristics which is generated using said set of relocation data.

Consecutively, a deviation between said performance basis indicator represented by said first spatial model and said performance destination indicator represented by said second spatial model is determined. Identifying a deviation between both indicator means, at first place, that the network characteristics have changed at some spatial coordinates due to a relocation. Whether these differences have a positive or negative effect or a mismatch on the network quality is preferably to be checked.

If there is a need for optimization, action data is generated for identifying one or more relocations - preferably including the virtually determined relocation for simulation purposes in an earlier step of the method - to be made to at least one of said processing facilities and/or at least one of said processing materials of the industrial environment in order to reduce said deviation.

In variation of an alternative method as suggested in a parallel patent application concurrently filed by the applicant, the presently suggested method does not exclusively aim to adjust the configuration of the industrial wireless network in order to reduce said deviation, but predominantly aims to change the environmental conditions within the industrial environment, or, in other words, aims to environmentally control the industrial environment itself. Changing the environmental conditions may particularly relocating processing facilities and/or processing materials in order to enhance the capabilities of the wireless network.

The present embodiments further relate to a controller comprising a processor and a data storage device having stored thereon computer executable program code, which, when executed by the processor, causes the processor to perform the above method.

The present embodiments further relate to a controller controlling an industrial environment including processing facilities and processing materials, wherein a wireless network being maintained within the industrial environment including equipment for operating the wireless network and/or for being connected to the wireless network, the controller comprising:
- a location data interface for retrieving a set of location data including at least one current location of at least one of said processing facilities and/or at least one current location of at least one of said processing materials;
- a processor for:
   - determining a performance basis indicator by assessing a first spatial model of radio characteristics of the wireless network using at least partially said set of location data;
   - assuming a set of relocation data including at least one relocation of at least one of said processing facilities and/or at least one of said processing materials;
   - determining a performance destination indicator by assessing a second spatial model of radio characteristics of the wireless network, the second spatial model being created by at least partially modifying said first spatial model using at least partially said set of relocation data;
   - identifying a deviation between said performance basis indicator represented by said first spatial model and said performance destination indicator represented by said second spatial model;
   - on an occurrence of said deviation, determining action data using the first and the second spatial model of radio characteristics of the wireless network, said action data identifying one or more relocations to be made to at least one of said processing facilities and/or at least one of said processing materials of the industrial environment in order to reduce said deviation; and;
- a network management interface for outputting said action data to an environmental control system.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: illustrates a cooperation of various functional units for environmentally controlling an industrial environment aiming for optimizing a wireless net-work operated within the industrial environment; and;
- FIG. 2:: is a schematic process chart depicting a chronologically ordered exchange of control and data transfer transmissions amongst various functional units cooperating to environmentally control or optimize the industrial environment.

### DETAILED DESCRIPTION

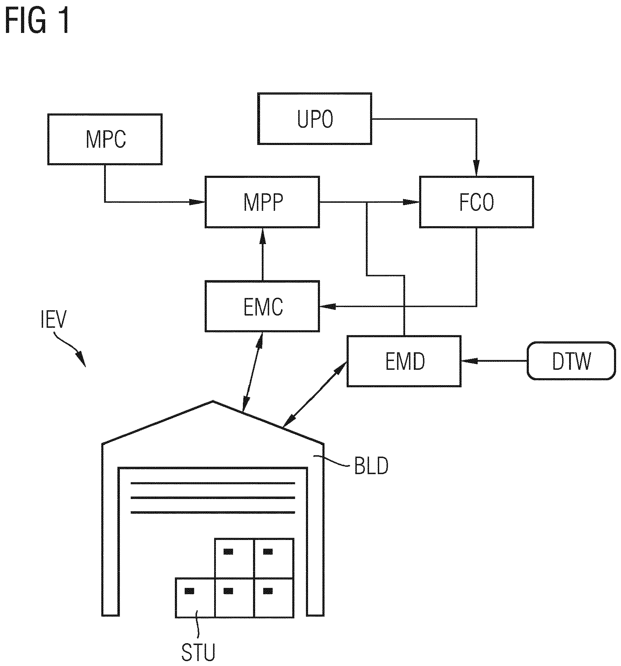

FIG. 1 illustrates an exemplary industrial environment IEV in which a wireless network is to be operated essentially ubiquitously. The industrial environment IEV may include both, indoor areas, and outdoor areas. The industrial environment IEV may include a factory building BLD and may be construed as a general site for industrial operations of any kind in which a wireless network is to be operated. Due to its ubiquity, the wireless network is not explicitly shown in the drawing.

For operating, participating, and using the wireless network, equipment for operating the wireless network and/or for being connected to the wireless network is provided but omitted in the drawing for the sake brevity.

The wireless network may include mobile carrier networks such as known Long-Term Evolution (LTE) networks or more preferably upcoming fifth or sixth generation communication networks also known as 5G or 6G networks. A dedicated mobile carrier network available at a particular site, e.g. an enterprise campus, may be also referred to as campus network. Campus networks may provide a non-roaming 5G infrastructure with services accessible exclusively to dedicated user equipment or UE. Other types of network access - including Wi-Fi or WLAN, long-range wireless, millimeter waves, WiMAX or Worldwide Interoperability for Microwave Access according to IEEE 802.16 etc. - may also be utilized in place of or in combination with such mobile carrier networks.

In the representation of FIG. 1, stacked units STU are shown to symbolize process materials. These process materials may include, for example, bundles, containers or packages that contain raw material, semi-finished material, consumable material, tools, production aids etc. Furthermore, the process material may also include unpackaged bulk goods. The embodiments provide for the location of at least one - preferably each - of these process materials to be continuously determined and tracked.

The industrial environment IEV may further include processing facilities - not shown in the drawing - such as manufacturing machines, production robots, production lines, automated guided vehicles, cranes, forklifts etc. The embodiments provide for the location of at least one - preferably each - of these processing facilities to be continuously determined and tracked. Although location tracking in automated guided vehicles is already a matter of course for logistical reasons, such continuous location tracking may advantageously include largely immobile, »analogue« or even non-electrical objects such as shelves, storage racks, cabinets, etc.

While a determination of a location has so far only been provided as part of an incoming inspection of process materials or a corresponding outgoing inspection of finished products, modern production processes increasingly require knowing the whereabouts of materials and goods at all times. These developments favor a requirement of the present embodiments in using the time-continuous tracking of goods in order to optimize the overall radio characteristics of the wireless network.

Industrial environments are harsh for wireless communications compared to an office environment, not least due to the fact that they are dominated by various metal objects, such as production machines, storage racks, etc. These obstacles shadow radio propagations and cause coverage holes on desired areas thereby affecting the radio characteristics or even the availability of the wireless network. The industrial environment IEV may change significantly over time, depending on incoming and outgoing materials and goods, as well depending on an actual process state e.g. pre-processing, set-up, maintenance, system replacement, ongoing operation etc.

Materials and goods generally affect the radio characteristics of the wireless network. In addition, autonomous or non-autonomous movements or relocations of materials and goods influence and change radio properties of the wireless network. This can be seen as a system-theoretical behavior of the network, i.e. as a system-theoretical response to a dynamic stimulus imposed by a relocation of materials and goods.

The present embodiments follow a general concept of combining regular measurements of radio characteristics of the wireless network with regular knowledge about the location of materials and goods affecting these radio characteristics of the wireless network.

Regular measurements may mean time-periodical measurements. Regular knowledge about the location of materials and goods may be attained by regularly or non-regularly retrieving and/or determining a set of location data. Within an industrial environment IEV, the generic term of materials and goods may be specified to mean that processing facilities and processing materials are the decisive objects affecting the radio characteristics of an industrial wireless network.

Regular knowledge about the relocation of materials and goods may be achieved by the same aforesaid step followed by an additional step of identifying deviations between a current set of location data compared to its predecessor or compared to a historical set of location data.

Having made these introductory comments on some general concepts of the present embodiments, the description of FIG. 1 continues below. The building BLD depicted in FIG. 1 represents an industrial environment IEV of any kind, preferably an industrial environment IEV with flexible production areas and/or process areas.

Flexible manufacturing processes of today, however, may be increasingly supportive of continuous material tracking and may also entail a change from formerly immobile manufacturing equipment, which are becoming increasingly mobile. While automated guided vehicles have long been used for autonomous material transport to production equipment, the mobility requirements of flexible production now also cover the production equipment itself. Since mobile production equipment may operate autonomously or at least semi-autonomously, their position may be autonomously and continuously determined anyway and tracked by a central coordination instance. Other kind of network elements may be embodied as immobile or static radio equipment, e.g., 5G base station, Wi-Fi access point or other industrial network elements such as switches or routers.

A user or plant operations interface UPO is provided to operate the overall industrial environment IE to accomplish production or service tasks. User/Plant Operations may be intended to optimize the usage of the plant by setting a target performance to the system, or, more specifically, to a forecast and optimization controller FCO. The target performance indicator - which may also be referred to as target KPI or target key performance indicator - may be a performance destination indicator as referred to throughout the description.

A manufacturing or process control MPC may be operated to indirectly control all production equipment, including raw material and product flows via a manufacturing or process planning component MPP.

The manufacturing or process planning component MPP may, in some embodiments, be regarded is a core component of the present embodiments. It may use the performance destination indicator or other target KPIs and process control inputs from the manufacturing or process control MPC, as well as status updates from an environment management and control system EMC. A process model may be created or updated on the occasion of:
- new or amended process control inputs, e.g., an increase in production speed; and/or;
- a status update of the environment management and control system EMC due to a change location of automated guided vehicles, unmanned aerial vehicles, staff, material, and/or opened or closed doors.

The updated process model may be forwarded to the forecast and optimization controller FCO.

The forecast and optimization controller FCO may use process model updates from the manufacturing or process planning component MPP, system Behavior updates from the Environment Model component - e.g., the behavior of the wireless communication system that is used to communicate with the production equipment - as well as Target KPIs from the User/Plant Operations component. Based on the received Target KPIs, the forecast and optimization controller FCO may calculate optimized control Procedures, so that system components are optimized in their behavior, e.g., do not place process material in front of an antenna.

The environment management and control system EMC may be operated as a control and management interface to the infrastructure or industrial environment IEV. The environment management and control system EMC may execute optimized control procedures received by the forecast and optimization controller FCO. The environment management and control system EMC may also receive material flow control and status updates from the industrial environment IEV and forward status updates to the manufacturing or process planning component MPP.

One or more environment models EMD, represents a state of an overall environment including information and updates of the industrial process. Environment models EMD include static and dynamic models on the behavior - e.g., embodied by a digital twin DTW - of the process and the industrial environment IEV. Also, locations (or positions) or relocations (or position changes) of production equipment, network elements, and incoming/outgoing material may be provided.

A digital twin DTW may include a description of a physical component, product, or system by a set of well aligned, descriptive and executable models. The digital twin DT may include a semantically linked collection of relevant digital artefacts including design and engineering data, operational data and behavioral descriptions. The digital twin DTW may evolve with a real system along the whole life cycle and integrate the currently available and commonly required data and knowledge. The digital twin DTW may allow to derive novel solutions, e.g. for operation and service, and design of new product ideas. The digital twin DTW may address types and instances aspects as well as combination of digital twin in production processes.

The industrial environment IEV, eventually, may mean to represents all infrastructure, mobile or immobile production equipment, structures, buildings, and staff required for the process. Sensors or other data suppliers within this industrial environment IEV may provide data on status updates, e.g., incoming and outgoing material flows. These status updates may be forwarded from the industrial environment IEV to one or more environment models EMD.

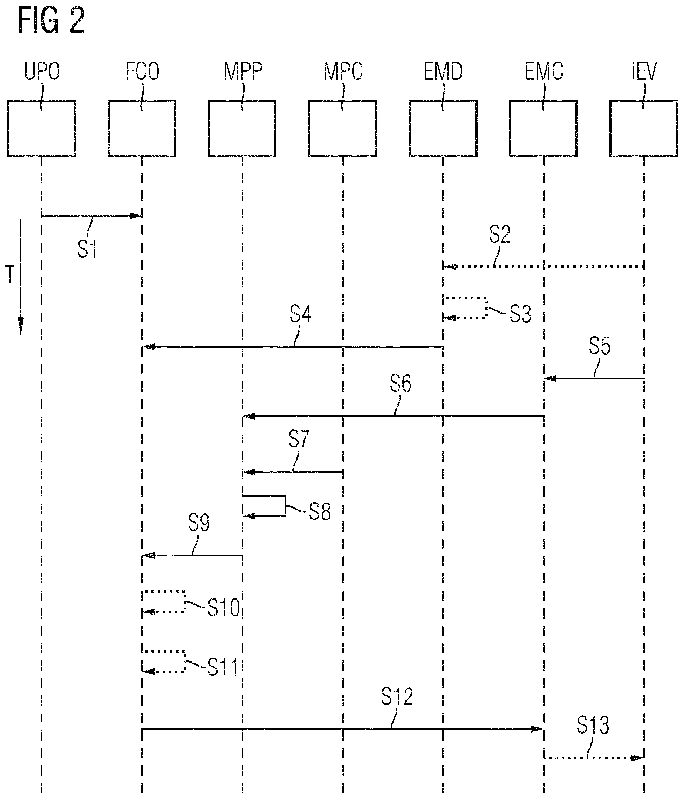

According to an embodiment, an exemplary method for environmentally controlling an industrial environment IEV is executed. FIG. 2 is a schematic process chart depicting an exemplary and chronologically ordered exchange of control and data transfer amongst various functional units cooperating to optimize the wireless network. The functional units involved in the exemplary exchange of control and data transfer include the user or plant operations interface UPO, the forecast and optimization controller FCO, the manufacturing or process planning component MPP, the manufacturing or process control MPC, one or more environment models EMD, the environment management and control system EMC, and the industrial environment IEV known from the description of FIG. 1.

A timeline T is shown on the left side of FIG. 2 in which consecutive points in time are chronologically ordered such that later points in time are further down than earlier points in time. For each of the functional units a respective vertical dashed line is plotted in order to illustrate a message exchange of the respective functional unit in relation to the point in time.

In a first optional step of the exemplary method, a performance destination indicator - which may also be referred to as target KPI or target key performance indicator - may be defined by a human or non-human entity, e.g. a user or a plant operation setting. In a first data transfer S1, the forecast and optimization controller FCO receives the performance destination indicator provided from the user or plant operations interface UPO. According to this embodiment, the performance destination indicator is defined preemptively. Alternatively, the performance destination indicator may be defined in a later stage, e.g. when assessing a second spatial model of radio characteristics of the wireless network.

In a second step of the exemplary method, current location data and relocation data of several industrial units - including processing facilities and/or processing materials - are retrieved and relocation data are determined or assumed, e.g. by simulation. This second step may include a retrieval of current locations of the equipment, current locations of material, and current process states. To this end, industrial environment information, including situational updates or changes, referring to static and physical models - including, e.g., floor plans, structures etc. - are transferred by a second data transfer S2 from the industrial environment IEV to one or more environment models EMD. By a third data transfer S3 a possibly recurring update of the environment models EMD - optionally using data received by the second data transfer S2 - may be accompanied inside a repository - not shown - for the environment models EMD. In a fourth data transfer S4, the forecast and optimization controller FCO receives data pertaining to a current system behavior from the environment models EMD, in particular the behavior of the wireless communication system that is used to communicate with the production equipment.

In a third step of the exemplary method, a performance destination indicator is determined by assessing a spatial model of radio characteristics of the wireless network. To this end, the environment management and control system EMC receives a fifth data transfer S5 pertaining to material flow control and status updates from the industrial environment IEV. In a sixth data transfer S6 the environment management and control system EMC forwards equipment information including said status updates to the manufacturing or process planning component MPP. In a seventh data transfer S7 the manufacturing or process control MPC provides, on retrieval by the process planning component MPP, data pertaining to process information and/or commands. By an eighth data transfer S8 a possibly recurring computation and/or prediction of a process model is accompanied inside the process planning component MPP. In a ninth data transfer S9, the eventually determined process model is transmitted to the forecast and optimization controller FCO.

In a fourth step of the exemplary method, a deviation between the performance basis indicator and the performance destination indicator is identified. By a tenth data transfer S10 a possibly recurring computation and/or prediction of a desired system behavior is accompanied inside the forecast and optimization controller FCO. For determining the desired system behavior, the performance basis indicator the performance destination indicator may be determined. Alternatively, the performance destination indicator may have been received in a former step. The desired system behavior may be based on a current system mode, the process model received by the ninth data transfer S9 the current performance basis indicator and the performance destination indicator.

On an occurrence of said deviation, action data may be determined in a fifth step of the exemplary method, said action data identifying one or more relocations to be made to at least one of said processing facilities and/or at least one of said processing materials of the industrial environment in order to reduce said deviation. The action data may be made available by optimized control procedures. By an eleventh data transfer S11 a possibly recurring computation and/or prediction of such required control procedures is accompanied inside the forecast and optimization controller FCO.

In a twelfth data transfer S12, the eventually determined optimized control procedures or action data are transmitted to the environment management and control system EMC. By a thirteenth data transfer S13, one or more commands are sent to the industrial environment IE in order to execute the optimized control procedure.

In the following sections, a fully automated warehouse - frequently referred to as »smart warehouse« - as a particular example for an industrial environment is described.

In a fully automated warehouse, material is stored according to given optimization routines available in the system model of the process. The process in this use case is obviously a pure logistics process. automated guided vehicles and other automated equipment, e.g., shuttles, rail-based systems etc. are used to transport material and communicate via radio links with a central control or with other industrial network elements.

The status of the storage area is »measured« with the position and type of the stored goods and a map of the radio signal strength and the channel characteristics (e.g., link speed, packet losses, delays). The map of the radio signal strength is updated continuously while automated guided vehicles are moving. With changing types of goods stored at different locations - goods are delivered and leave the storage area, as well as new goods are coming in - the modelling component can estimate a future network behavior. Therefore, the status of the storage is used as baseline.

Process information is fused with knowledge on behavior of the radio map (e.g., based on previous measurements of the radio signal, or based on calculations) as well as current positions of the automated guided vehicles (also automated guided vehicles will influence the radio signal propagation) to estimate the future radio signal map for the storage area. Process information may include data about planned incoming goods, planned goods to be delivered and/or the storage management strategy for optimal process compliance. A »behavior« of the radio map may be assessed by evaluating a spatial model of radio characteristics of the wireless network and its predecessor.

Based on the results of that estimation and based on known and/or the learnt model of how incoming and outgoing goods influence the radio signal according to the current configuration of the network and the industrial environment, one or more alternatives for network configuration and potential updated storage locations of new incoming goods for further network optimization may be calculated or determined. This information may be used to select the optimal storage location of future incoming goods and optionally the corresponding network configuration. Based on this, delivery commands for incoming goods may be updated. On arrival of goods to be stored, a storage may be commissioned at updated locations. A configuration of the networking components and radio equipment may be adapted accordingly. Advantageously, not only the wireless network configuration has an optimal setup for the current warehouse storage state, but also the storage locations of the goods are optimized to support optimal network operations.

Examples for advantageous storage configurations are:
- Placement and/or stacking of metal storage containers STU in such a way that the stacked metal storage containers STU block radio signals and interferences of neighboring radio cells;
- placement and/or stacking of goods in such a way, that radio wave propagation corridors - e.g., in absence of further stored goods - are maintained; and/or;
- placement and/or stacking of goods applying physical propagation theory principles, so that the propagation radio waves is generally enhanced.

If smart warehouse systems are replicated on different industrial sites, a learnt model may be transferred to a new industrial site as a baseline for initiating a model on the new site with an already pre-trained model.

In summary, the invention relates to a computer-implemented method for controlling an industrial wireless network operated in an industrial environment including processing facilities and processing materials. Continuous optimization of the radio characteristics ensures seamless operations in changing or dynamic environments wherein relocating materials and/or mobile production equipment have a dynamic impact on the radio characteristics.

The invention allows for estimating a local and site-wide radio signal quality for a near future. Knowledge of a spatial distribution of the signal quality may be advantageously shared with mobile production units or other network elements in order to notify these units expected link restrictions or performance degradation in advance.

A network configuration may be advantageously adopted to changing environments and in parallel to the environmental changes, so that the expected performance degradation is minimized.

Industrial processes inherently have certain degrees of freedom in their operation. These industrial processes are advantageously considered as controllable component to support the operation of the core infrastructure. In this way, the invention allows for achieving enhanced robustness and better operational results, since the interdependencies between industrial process and infrastructure are considered in a holistic and self-optimizing system.

In general, risks of industrial process operation problems due to communication issues may be significantly reduced.

## Claims

1. A method for environmentally controlling an industrial environment including processing facilities and processing materials, wherein a wireless network being maintained within the industrial environment including equipment for operating the wireless network and/or for being connected to the wireless network, the method comprising the steps of:
- retrieving a set of location data including at least one current location of at least one of said processing facilities and/or at least one current location of at least one of said processing materials;
- determining a performance basis indicator by assessing a first spatial model of radio characteristics of the wireless network using at least partially said set of location data;
- assuming a set of relocation data including at least one relocation of at least one of said processing facilities and/or at least one relocation of at least one of said processing materials;
- determining a performance destination indicator by assessing a second spatial model of radio characteristics of the wireless network, the second spatial model being created by at least partially modifying said first spatial model using at least partially said set of relocation data;
- identifying a deviation between said performance basis indicator represented by said first spatial model and said performance destination indicator represented by said second spatial model;
- on an occurrence of said deviation, determining action data using the first and the second spatial model of radio characteristics of the wireless network, said action data identifying one or more relocations to be made to at least one of said processing facilities and/or at least one of said processing materials of the industrial environment in order to reduce said deviation; and;
- outputting said action data to an environmental control system.

2. The method according to claim 1, wherein assuming a set of relocation data includes systematically testing varying data within said set of relocation data and wherein said testing being driven by an optimization goal of increasing the performance destination indicator.

3. The method according to one of the aforementioned claims, assuming a set of relocation data includes a linear or nonlinear extrapolation based on a continuously retrieved set of location data.

4. The method according to one of the aforementioned claims, wherein at least one parameter of said radio characteristics of the wireless network is indicative of:
- a signal quality;
- a latency;
- a bit error rate;
- a network status;
- a frame error rate; and/or;
- a wireless network channel.

5. The method according to one of the aforementioned claims, wherein one or more system models for representing behavioral data of an industrial process are used for determining the performance base indicator and/or the performance destination indicator.

6. A controller for environmentally controlling an industrial environment including processing facilities and processing materials, wherein a wireless network being maintained within the industrial environment including equipment for operating the wireless network and/or for being connected to the wireless network, the controller comprising:
- a location data interface for retrieving a set of location data including at least one current location of at least one of said processing facilities and/or at least one current location of at least one of said processing materials;
- a processor for:
- determining a performance basis indicator by assessing a first spatial model of radio characteristics of the wireless network using at least partially said set of location data;
- assuming a set of relocation data including at least one relocation of at least one of said processing facilities and/or at least one of said processing materials;
- determining a performance destination indicator by assessing a second spatial model of radio characteristics of the wireless network, the second spatial model being created by at least partially modifying said first spatial model using at least partially said set of relocation data;
- identifying a deviation between said performance basis indicator represented by said first spatial model and said performance destination indicator represented by said second spatial model;
- on an occurrence of said deviation, determining action data using the first and the second spatial model of radio characteristics of the wireless network, said action data identifying one or more relocations to be made to at least one of said processing facilities and/or at least one of said processing materials of the industrial environment in order to reduce said deviation; and;
- an interface for directly or indirectly outputting said action data to an environmental control system.
